# EUROPEAN PATENT APPLICATION

(11) **EP 4 835 812 A1**
(43) Date of publication of application: **04.11.2026**
(21) Application number: 26164121.1
(22) Date of filing: 11.03.2026
(51) Int. Cl.: G06T 7/00, G06T 5/00

(54) **COMPUTER-IMPLEMENTED METHOD FOR GENERATING A DIGITAL IMAGE REPRESENTATIVE OF ONE OR MORE CHARACTERISTICS OF A PREDEFINED TYPE OF A SURFACE OF INTEREST OF A WOODEN ARTICLE**

(30) Priority: 30.04.2025 IT 202500009774
(71) Applicant: MICROTEC S.p.A., 39042 Bressanone (BZ) (IT)
(72) Inventor: GIUDICEANDREA, Federico, 39042 BRESSANONE BZ (IT); URSELLA, Enrico, 30174 MESTRE VE (IT)
(74) Representative: Ponchiroli, Simone

(57) **Abstract**

A computer-implemented method wherein: a first digital image (8) and a second digital image (9) are taken which represent one or more characteristics of a first portion (10) and a second portion (11) of a surface of interest (1) which between them delimit a third portion (12); the first digital image (8) and the second digital image (9) are fed to a trained artificial intelligence algorithm which supplies a third digital image (13) which represents one or more characteristics of a predefined type of the third portion (12); and a digital image is generated which is representative of the surface of interest (1) by associating with each other the first digital image (8) or a digital processed version of the first digital image (8), the second image or a digital processed version of the second digital image (9) and the third digital image (13).

## Description

This invention relates to a computer-implemented method for generating a digital image representative of one or more characteristics of a predefined type of a surface of interest of a wooden article.

In particular, this invention was devised in the context of timber processing plants, in which the wooden boards are kept with the lower surface resting on supporting units and wherein it is necessary to acquire an image (RGB or another type) of the lower face of the boards. As is known, in a board it is possible to identify two end faces perpendicular to the longitudinal axis of the board, two main lateral faces parallel to the longitudinal axis and two secondary lateral faces, usually smaller, which are also parallel to the longitudinal axis. The lower surface usually corresponds to the surface of one of the main lateral faces.

In the processing plants, the boards undergo a plurality of quality inspections to allow the quantification of their good points and defects.

Amongst these inspections, for example, one relates to the outer appearance of the lateral faces, and in particular of the main lateral faces. For that purpose, in more modern plants it is known that at least one digital image of each lateral face is acquired, which can then be inspected by an electronic processing unit, for example to assign to each point of the surface (represented by one or more pixels of the image) a classification, such as one or more from amongst sapwood, heartwood, wood without defects, wood with defects, knot, crack, etc.

In accordance with the most widespread solutions, acquisition of the images takes place while the board is moved forward along a movement path, oriented perpendicularly to the movement path. For that purpose, the board is usually moved, by means of supporting units, through a scanning station in which at least one upper scanner and one lower scanner are positioned. The upper scanner acquires a digital image of the upper face of the board, that is to say, the face directed upwards (and, if necessary, also of the lateral faces perpendicular to it). The lower scanner is in contrast for acquiring a digital image of the lower face of the board, that is to say, of the face resting on the supporting units. Each scanner usually comprises a plurality of image acquisition devices distributed along a line transversal to the movement path. Usually, acquisition of a complete image of the upper surface does not involve particular problems, as is the case for any other face of the board which can be viewed without elements extraneous to the board obstructing the field of view of the image acquisition devices.

In contrast, as can easily be inferred, the presence of the lower supporting units is an obstacle to acquisition of a complete image of the lower surface of the board.

A similar problem arises, obviously, whenever extraneous elements are present interposed between the image acquisition device and the surface whose image must be acquired.

In an attempt to overcome this problem, over the years various solutions have been devised.

According to a first solution, covered in patent EP 3220143, the decision was made to minimise the contact zone between the supporting units and the lower surface of the board by equipping the supporting units themselves with supporting elements preferably with a wedge-shaped cross-section, tapering upwards. Moreover, according to that solution, the images of the lower surfaces of the boards are acquired by means of image acquisition devices configured and positioned in such a way as to be able to acquire an image of the entire portion of lower surface included between two supporting units side by side, using the inclination of the supporting elements on one hand and the angle of view of the image acquisition devices on the other.

The solution according to patent EP 3220143 A1 is in itself capable of allowing optimum results to be obtained, since the blind zones were reduced to transversal strips with a width of just a few millimetres, that is to say, a size such that it can be ignored since it is less than that of any possible significant defect of the surface of the wooden board.

Despite that, some wooden board producers continue to prefer solutions which allow a complete image of the lower surface of the board to be obtained, without blind points, so as to be able to carry out the quality inspection by considering the entire surface and not just its separate parts (even if they are only separated by a few millimetres).

Furthermore, in many plants it is not possible to adopt conveying solutions which only create a minimal obstruction, such as that in EP 3220143 A1. That may be due, for example, to the need to combine the board image acquisition systems with pre-existing conveying systems.

In an attempt to meet those market needs, solutions were developed in which board lower surface image acquisition is performed by means of two partial acquisitions, carried out one after another in time. The first acquisition is carried out while the board is supported by a first group of supporting units, by photographing only the parts of the lower surface which are not resting on the supporting units. Then the board is transferred onto a second group of supporting units, staggered relative to those of the first group, in such a way that the parts of the lower surface which were resting on the first group of supporting units can be freely viewed. An example of this type of plant is described in US 7751612 in which the first digital image acquisition device and the second image acquisition device are positioned at the transit zone between a first and a second chain conveyor which are out of alignment relative to each other.

However, this prior art technology also has several disadvantages. In particular, this solution is not suitable for installation in existing plants where it is not possible or not economically feasible to modify the structure of the movement system for the boards.

Moreover, it involves a construction complication, with a consequent increase in costs, since it is necessary to double both the conveying system, and the number of images to be used.

In this context the technical purpose which forms the basis of this invention is to provide a method for scanning wooden boards and an apparatus which implements it, which overcome the above-mentioned disadvantages.

In particular, the technical purpose of this invention is to provide a method which allows the obtainment of images representative of one or more characteristics of a predefined type of a surface of interest of a wooden article (above all wooden boards), in a simple and relatively inexpensive way even when the wooden articles are resting on conveying units which prevent the acquisition of complete images.

The technical purpose and the aims indicated are substantially achieved by a computer-implemented method for generating a digital image representative of one or more characteristics of a predefined type of a surface of interest of a wooden article, in accordance with what is defined in independent claim 1. Particular embodiments of this invention are defined in the other claims. Further characteristics and the advantages of this invention will be more apparent in the detailed description of several preferred, non-limiting embodiments of a computer-implemented method for generating a digital image representative of one or more characteristics of a predefined type of a surface of interest of a wooden article, described below with reference to the accompanying drawings, in which:
- Figure 1 is a schematic bottom view, of an apparatus for the acquisition of images of a lower face of a board;
- Figure 2 is a schematic front view of the apparatus of Figure 1;
- Figure 3 represents a digital photograph of a surface of interest of a wooden board with one part not visible due to the presence of conveying units;
- Figure 4 represents a real complete digital photograph of the surface of interest of Figure 3;
- Figure 5 represents a complete digital photograph of the surface of interest of Figure 3 obtained in accordance with the method according to this invention;
- Figure 6 represents a digital photograph of a surface of interest of a wooden board with one part not visible due to the presence of conveying units;
- Figure 7 represents a real complete digital photograph of the surface of interest of Figure 6;
- Figure 8 represents a complete digital photograph of the surface of interest of Figure 6 obtained in accordance with the method according to this invention;
- Figure 9 represents a real image of a surface of interest of a wooden board, in which two lines delimit a zone of interest;
- Figure 10 shows the image of Figure 9 segmented to identify the position of the pith; and
- Figure 11 represents an image segmented to identify the position of the pith, obtained starting from the image of Figure 9 by substituting the real image of the zone of interest with an image generated with the method according to this invention;
- Figure 12 represents a real image of a surface of interest of a wooden board, in which two lines delimit a zone of interest;
- Figure 13 shows the image of Figure 12 segmented to identify the position of the knots; and
- Figure 14 represents an image segmented to identify the position of the knots, obtained starting from the image of Figure 12 by substituting the real image of the zone of interest with an image generated with the method according to this invention;
- Figure 15 represents a real image of a surface of interest of a wooden board, in which two lines delimit a zone of interest;
- Figure 16 shows the image of Figure 15 segmented to identify the position of resin pockets; and
- Figure 17 represents an image segmented to identify the position of resin pockets, obtained starting from the image of Figure 15 by substituting the real image of the zone of interest with an image generated with the method according to this invention;
- Figure 18 represents a real image of a surface of interest of a wooden board, in which two lines delimit a zone of interest;
- Figure 19 shows the image of Figure 18 segmented to identify the position of cracks; and
- Figure 20 represents an image segmented to identify the position of cracks, obtained starting from the image of Figure 18 by substituting the real image of the zone of interest with an image generated with the method according to this invention;
- Figure 21 represents a real image of a surface of interest of a wooden board, in which two lines delimit a zone of interest;
- Figure 22 shows the image of Figure 21 segmented to identify the position of zones affected by the defect known as brown wood rot; and
- Figure 23 represents an image segmented to identify the position of zones affected by brown wood rot, obtained starting from the image of Figure 21 by substituting the real image of the zone of interest with an image generated with the method according to this invention.

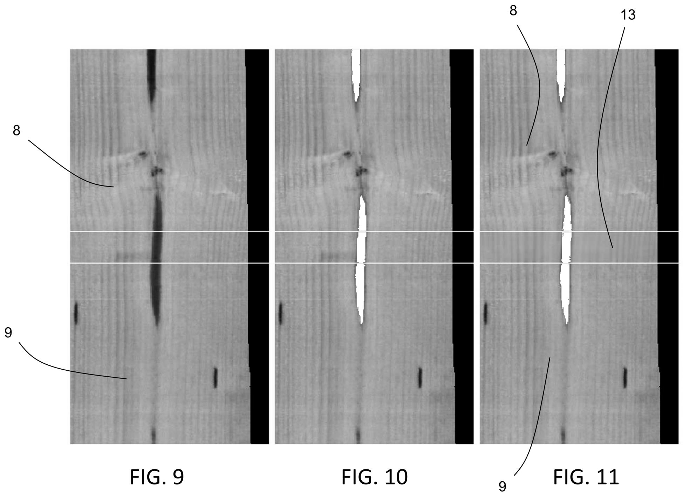

It should be noticed that Figures 10, 11, 13, 14, 16, 17, 19, 20, 22, 23 are images which are purely for illustrative purposes in which the illustration of the segmentation for identifying defects is superposed on the photographic image of the wooden surface; however, in cases of practical implementation of the method it is normally the case that, if necessary, the illustration of the segmentation is represented relative to a uniform neutral background (for example white defects on a black background, or black defects on a white background, etc.).

The innovative heart of this invention is constituted of a computer-implemented method, for generating a digital image of a surface of interest 1 of a wooden article 2, which represents one or more characteristics of a predefined type. Other innovative aspects of this invention are a computer program which comprises instructions which, when the program is run in a computer, make the computer carry out the steps of the method and a data processing device comprising means configured to carry out the steps of the method.

A further innovative aspect of this invention is constituted of an apparatus 3 which comprises a conveying device 4 for conveying wooden articles 2 in a direction of forward movement 5, one or more digital image acquisition devices 6 and a data processing device (not illustrated) comprising means configured to carry out the steps of the method using the images acquired by the image acquisition devices 6.

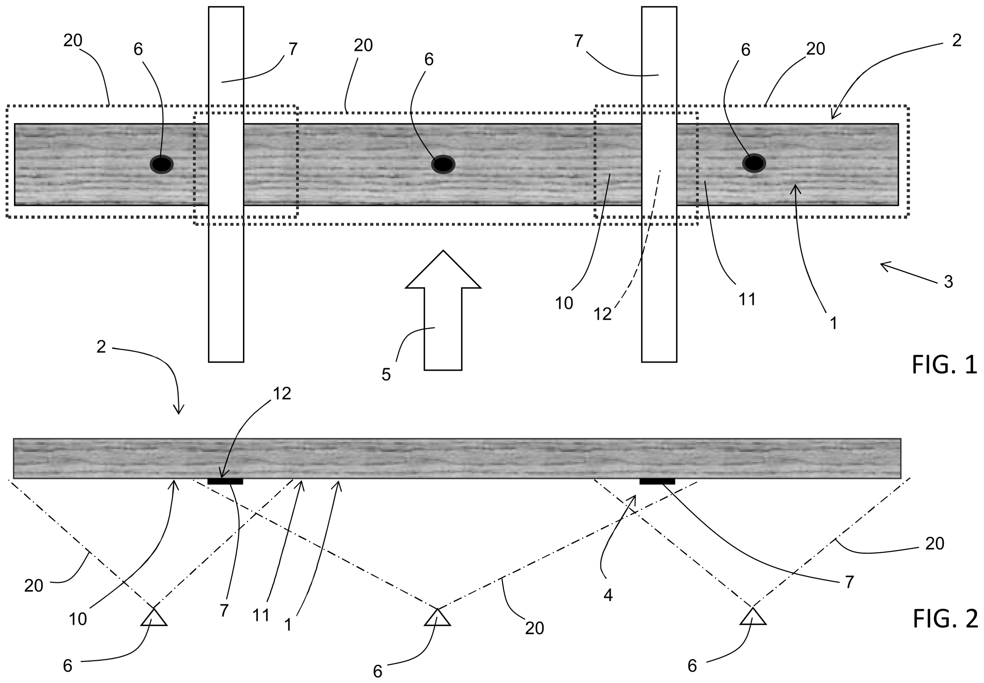

An apparatus 3 in accordance with this invention, intended for managing wooden articles 2 constituted of boards, is schematically illustrated in Figures 1 and 2.

The conveying device 4 comprises a plurality of supporting units 7 for the boards (two in the appended schematic figures), and the one or more digital image acquisition devices 6 (three in the figures) are positioned under the supporting units 7 at an acquisition station.

The one or more acquisition devices 6 are configured to acquire digital images of a lower surface of each wooden board, while the board is resting on the supporting units 7. In Figure 1, the broken line rectangles schematically represent the field of view 20 of each acquisition device 6 (in the figure the rectangles are slightly staggered in the direction of forward movement 5 only to make each rectangle clearly identifiable in the drawing). The data processing device is configured to use either the digital images acquired by the one or more image acquisition devices 6, or processed versions of those digital images, as first digital image 8 and second digital image 9 in accordance with what is required by the method according to this invention described below.

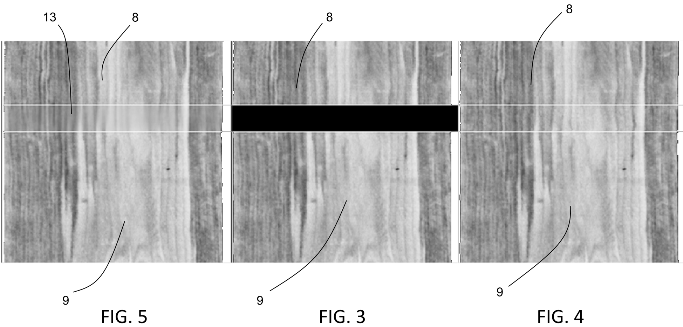

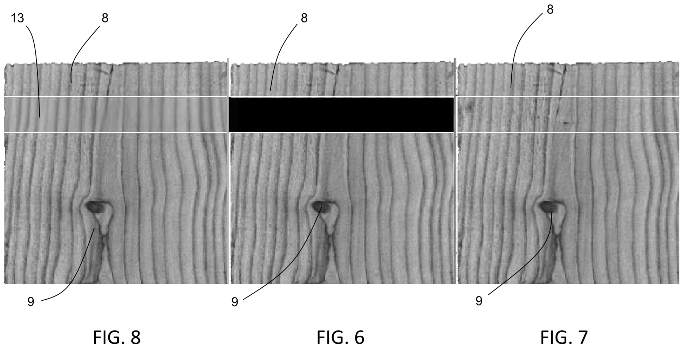

As already indicated, the method according to this invention is for generating a digital image representative of one or more characteristics of a predefined type of a surface of interest 1 of a wooden article 2 (Figures 5 and 8). Identified in the surface of interest 1 are a first portion 10 and a second portion 11 which are at least partly spaced apart from each other and which between them delimit a third portion 12 which is separate from them. As explained below, the method according to this invention involves having available real data about the first portion 10 and the second portion 11, and allows the generation of a digital image of the third portion 12 (hereinafter called the third image 13) which represents one or more characteristics of a predefined type. The method involves generating the third image 13 starting from a first digital image 8 of the first portion 10, which represents one or more characteristics of a first type, and from a second digital image 9 of the second portion 11, which represents one or more characteristics of the same first type. In more detail, the method according to this invention proposes to succeed in generating, without having available real data about the third portion 12 of surface, a digital image of the third portion 12 which may be considered a good approximation of what the real image would be. Applied to the apparatus 3 of Figure 1, for example, the method allows the obtainment of a (rough) digital image of the entire lower surface of the board, without having the possibility of directly viewing the zones of surface resting on the supporting units 7.

In the context of this invention, the definition digital image is used in a broad sense to indicate a digital file which refers to a portion of surface (such as the first portion 10, the second portion 11, the surface of interest 1 as a whole, etc.), considers it divided into a matrix of pixels, each of which corresponds to a given zone of the surface as in any digital image, and in which, moreover, one or more different types of information are associated with each pixel. Each type of information is advantageously digitally saved as a different channel of the image; a non-exhaustive list of possible type of information/channels includes: R (red), G (green), B (blue), brightness, value of the scatter angle generated in that pixel by a structured laser point of light, value of the size ratio of the scatter ellipse generated by the structured laser point of light, reflected light intensity value, etc.). In the context of this invention, therefore the digital image is not necessarily a photographic representation of a surface (even if it may be that).

In the context of this invention, the "first type" and the "predefined type" referring to the characteristics represented by the digital images may be the same as each other or different. Moreover, each of the "first type" and the "predefined type" corresponds to a specific combination of channels/types of information saved in the digital image.

Therefore, in accordance with this invention, the first digital image 8 and the second digital image 9 may be either images acquired directly by an image acquisition device 6, or images constituted of the assembly of images acquired by multiple acquisition devices 6 side by side, or images generated by combining in a single image different channels acquired by different types of acquisition devices 6, or processed versions of any of those images.

In the case of wooden boards managed by an apparatus 3 which moves them forward in a direction of movement 5, the surface of interest 1 is usually part of either the lower surface of the board (for example in the case in Figures 1 and 2), or of one of the front lateral face or the rear later face (with reference to the direction of movement 5). Therefore, the third portion 12 is identifiable in each portion of the surface of interest 1 for which viewing, by the one or more image acquisition devices 6, is obstructed by the supporting units 7 or by other elements of the apparatus 3. For each third portion 12, the first portion 10 and the second portion 11 are identifiable in the two portions of the surface of the board which can be viewed on the two sides of the obstructed zone.

In the applications most of interest the third portion 12 has a rectangular shape and, if the wooden article 2 is constituted of a board, has a length which coincides with the width of the board, and a width measured along the longitudinal extent of the board.

The method according to this invention is advantageously applied when the third portion 12 has a width (understood as the distance between the first portion 10 and the second portion 11) which is less than 80 mm, preferably less than 50 mm.

The method according to this invention is also advantageously applied when the first portion 10 and the second portion 11 have a width (understood as the extent moving away from the third portion 12 - along the longitudinal extent in the case of boards) which is greater than 150 mm.

In accordance with this invention, the method therefore necessarily comprises a step of taking the first digital image 8 which represents one or more characteristics of a first type of the first portion 10 of the surface of interest 1, and a step of taking a second digital image 9 which represents one or more characteristics of the first type of the second portion 11 of the surface of interest 1.

In some embodiments the method even comprises receiving the first digital image 8 and the second digital image 9 from an electronic device which has acquired or generated them.

In contrast, in some embodiments, the method comprises a step of receiving a digital image of the first portion 10 and a digital image of the second portion 11, and a processing step during which the first digital image 8 and the second digital image 9 are created by processing the digital image of the first portion 10 and the digital image of the second portion 11 previously received. Advantageously, the processing step may be a segmentation step in which the first digital image 8 and the second digital image 9 are processed with a segmentation algorithm for generating, respectively, a first segmented digital image 8 and a second segmented digital image 9 which are used as a first digital image 8 and a second digital image 9 for the subsequent steps.

At this point, the method comprises feeding the first digital image 8 and the second digital image 9 to an artificial intelligence algorithm and receiving an output digital image supplied by the artificial intelligence algorithm. The first digital image 8 and the second digital image 9 therefore constitute the input data for the artificial intelligence algorithm.

In accordance with this invention, the artificial intelligence algorithm is an algorithm trained to receive, as input data, a first input digital image 8 and a second input digital image 9, each of which represents one or more characteristics of the above-mentioned first type, and which are considered to refer, respectively to a primary portion and to a secondary portion of a wooden surface. The algorithm is also trained to supply, as output data, an output digital image which is representative of one or more characteristics of the predefined type of an intermediate portion of the wooden surface which has predetermined dimensions and which is delimited by the primary portion and by the secondary portion of the wooden surface.

The intermediate portion is therefore positioned, relative to the primary portion and to the secondary portion, in the same way as the third portion 12 is positioned relative to the first portion 10 and to the second portion 11. Moreover, advantageously, the intermediate portion is configured to have the same dimensions as the third portion 12 of the surface (therefore, for example, the same dimensions as the area obstructed by the supporting units 7).

In some embodiments, the first image and the second image, in terms of pixels, are the same size, respectively, as the primary image and as the secondary image.

In contrast, in some embodiments, the first image and/or the second image, in terms of pixels, are different sizes, respectively, relative to the primary image and/or to the secondary image. However, preferably, at least the edges which are facing, respectively, the third portion 12 and the intermediate portion, are the same size in terms of the number of pixels.

In some embodiments, the artificial intelligence algorithm is an Inpainting algorithm.

In some embodiments, the artificial intelligence algorithm is a Denoising algorithm, in particular a Denoising Diffusion Model type algorithm, or a Denoising Diffusion Probabilistic Model type algorithm.

Once the output digital image produced by the artificial intelligence algorithm has been received, the method comprises considering the output digital image as a third digital image 13 which represents one or more characteristics of said predefined type of the third portion 12 of the surface of interest 1.

The method also comprises generating the digital image representative of the surface of interest 1 as a whole (generating step), by associating with each other three digital images corresponding respectively:
- one to the first digital image 8 or to a digital processed version of the first digital image 8;
- one to the second image or to a digital processed version of the second digital image 9; and
- one to the third digital image 13.

The first digital image 8 and the second digital image 9 are used unchanged, when the type of characteristics they represent (the first type) correspond to the type of characteristics represented by the third image 13 (the predefined type).

In contrast, when that is not the case, the first digital image 8 and the second digital image 9 are processed to generate two images which represent, respectively for the first portion 10 and for the second portion 11, characteristics of the predefined type.

Therefore, in general, in the generating step three digital images are associated with each other, all representative of the one or more characteristics of the same predefined type. For example, they may represent the RGB aspect of the different portions, or the infra-red aspect, or the position of any defects or specific zones of the wood.

The three digital images, which are associated during the generating step, are also associated with each other based on how the first portion 10, the second portion 11 and the third portion 12 are positioned relative to each other; in fact, advantageously, the digital image representative of the surface of interest 1 represents the entire surface of interest 1 with its real proportions.

Depending on requirements, the method may be implemented in different ways.

In some embodiments, the method comprises taking, as the first digital image 8 and second digital image 9, respectively, a photographic image of the first portion 10 and a photographic image of the second portion 11 and the artificial intelligence algorithm is trained to supply an output digital image which simulates a photographic image of a wooden surface (Figures 3-5 and 6-8); for example, in Figures 5 and 8 the central zone, which corresponds to the black area of Figures 3 and 6, was generated with the artificial intelligence algorithm in accordance with this invention.

In some of these embodiments, the method also comprises a classification step which can be carried out in two main alternative ways. According to the first way, the digital image representative of the surface of interest 1 is processed to assign a classification to the pixels of which it is composed. According to the second way, the first digital image 8, the second digital image 9 and the third digital image 13 are in contrast processed separately to assign a classification to the pixels of which they are composed. Advantageously, the classification step is a segmentation step during which a segmentation algorithm is used to process alternatively and respectively, either the digital image representative of the surface of interest 1, or each of the first digital image 8, the second digital image 9 and the third digital image 13.

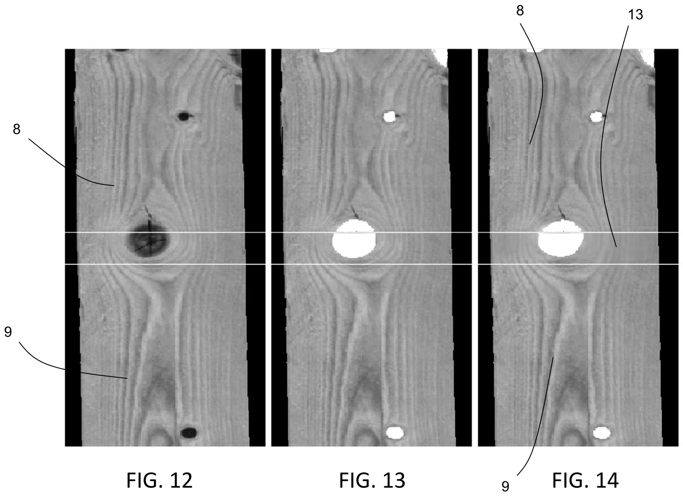

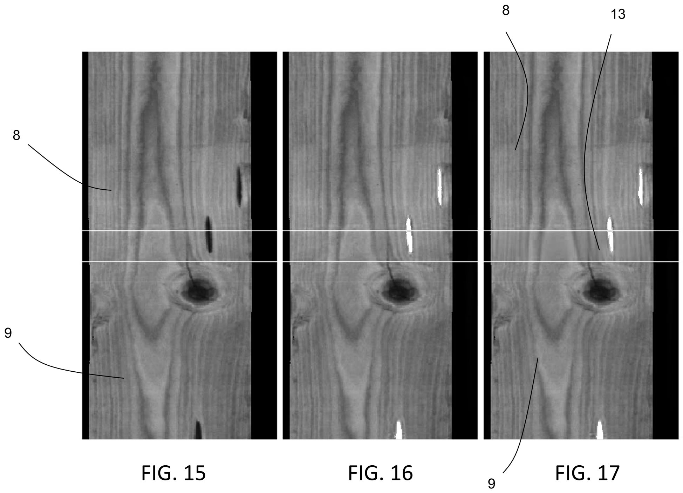

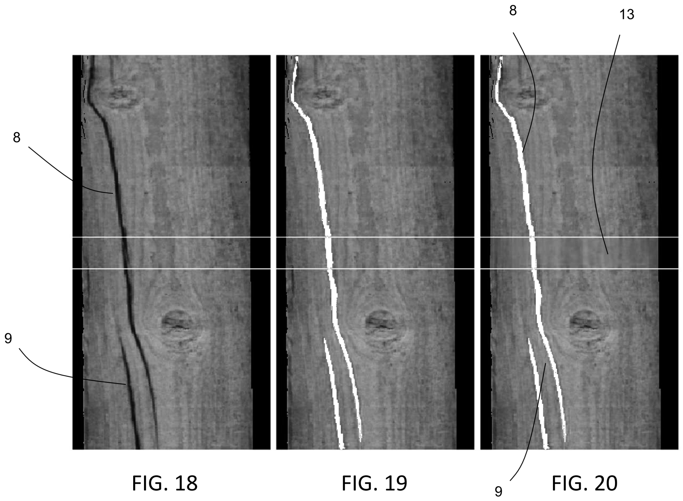

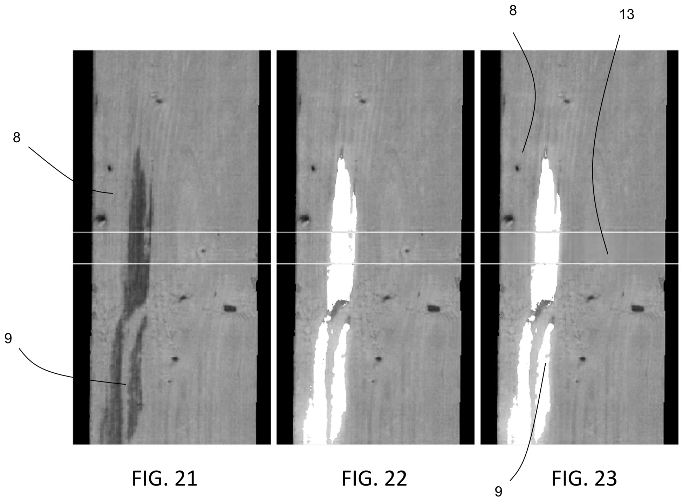

In ways that are in themselves known, the segmentation step may advantageously be carried out to identify in the image zones of the surface of interest 1 in which the wood has predetermined characteristics such as: presence of sapwood, presence of heartwood, presence of wood without defects, presence of wood with defects, presence of a knot (Figures 12-14), presence of a crack (Figures 18-20), presence of the pith (Figures 9-11), presence of resin pockets (Figures 15-17), presence of brown wood rot (Figures 21-23), presence of white rot, presence of soft rot, presence of blue rot, presence of mould, presence of insect attacks, presence of holes made by xylophagous insects, presence of termite damage, presence or tunnels or holes for larvae, etc. The segmentation algorithms which allow the segmentation steps to be carried out with reference to a wooden surface are in themselves known and therefore are not described here or below.

In other embodiments of the method according to this invention, in the generating step use is made, respectively, of a first segmented digital image 8 obtained by processing the first digital image 8 with a segmentation algorithm and a second segmented digital image 9 obtained by processing the second digital image 9 with the segmentation algorithm.

In contrast, some embodiments of the method take and use as the first digital image 8 and second digital image 9, respectively, a first segmented digital image 8 obtained by processing a digital image (photographic or other type) of the first portion 10 and a second segmented digital image 9 obtained by processing a digital image (photographic or other type) of the second portion 11. In this case too, the method may also comprise a step of receiving the digital image of the first portion 10 (photographic or other type) and the digital image of the second portion 11 (photographic or other type), and a segmentation step during which the digital image of the first portion 10 and the digital image of the second portion 11 are processed with a segmentation algorithm for generating, respectively, the first segmented digital image 8 and the second segmented digital image 9.

In some embodiments, the artificial intelligence algorithm is trained to supply an output digital image which simulates a segmented image of a wooden surface (irrespective of whether or not the first image and the second image are also segmented).

In other embodiments, the generating step is carried out after the step of receiving the output image supplied by the artificial intelligence algorithm.

In contrast, in some embodiments, the generating step is carried out in multiple steps while the method is carried out. In some cases, in particular, there is a combining step, which is carried out before the step of feeding the first digital image 8 and the second digital image 9 to the artificial intelligence algorithm.

During the combining step, the first digital image 8 and the second digital image 9 are combined in a single digital working image in which between them they delimit a working space with dimensions corresponding to those of the output digital image generated by the artificial intelligence algorithm (the digital working image has dimensions corresponding to the sum of the dimensions of the first digital image 8, of the second digital image 9 and of the third digital image 13). Moreover, the artificial intelligence algorithm is trained to receive, as input data, the first input digital image 8 and the second input digital image 9 not as independent images, but as parts of a single overall input digital image, which also comprises an input space delimited by the first input digital image 8 and by the second input digital image 9 and which has dimensions equal to those of the third image 13 to be obtained. Furthermore, the artificial intelligence algorithm is programmed to supply the output digital image not in independent form, but within the modified working digital image, by inserting the output digital image (the third image 13) in place of the working space delimited between the first image and the second image. Advantageously, in this case all of the images are consistent with each other, that is to say, they represent characteristics of the same type (the predefined type).

In some embodiments, what was described above is repeated for a plurality of pairs each constituted of a first portion 10 and of a second portion 11 of a same surface of interest 1 (for example in the case of a board resting on a plurality of separate conveying units as in Figures 1 and 2 (in which two pairs are identifiable).

In particular, that may be done to obtain a digital image which represents an entire extent of the surface of interest 1 and which comprises the plurality of pairs.

As regards the artificial intelligence algorithm, in some embodiments it is a U-Net type algorithm.

As regards its training, it may be carried out in a simple way by having available a suitable number of entire surfaces of wooden objects.

Referring, for simplicity, to the case of wooden boards, having ascertained the standard size of the first portion 10 and of the second portion 11 to be used, and of the third portion 12 whose third image 13 is to be created, it is in fact possible to identify in each digital image available of a face of a wooden board, a plurality of longitudinal pieces which cover the entire width of the board and a length equal to the sum of the extents in that direction of the first portion 10, of the second portion 11 and of the third portion 12. For each piece of image the parts which correspond to the first image, to the second image and to the third image 13 can then be extracted, which are then supplied to the artificial intelligence algorithm in the training step respectively as two input images and one output image.

Alternatively (especially if the algorithm is trained to use as input a single image representative of all three portions 10, 11, 12) the algorithm can be supplied with complete input images, with masking (by making black, using noise or other) of the input image where the presence of the third portion 12 is to be simulated (that is to say, where the third image 13 is to be obtained in the output image).

In contrast, to train an algorithm which uses as input images of a type different from that which is to be obtained as output (for example if the input images are photographic images and the output images are segmented images for identifying specific defects), it is possible to supply the algorithm with partial or complete input images and corresponding images with the pixels correctly classified as output. In this case too, if complete images are taken as input, whose classification everywhere is therefore known, the input image is masked (by making black, using noise or other) where the presence of the third portion 12 is to be simulated. By appropriately selecting the different pieces of board to be supplied as training data it is possible to supply to the algorithm an extremely complete case history (in particular if the training is carried out with reference to a specific type of wooden articles).

The same procedure can then be followed for validating the model using further pieces of other images.

As can also be seen for example in the accompanying figures, with a suitably trained artificial intelligence algorithm it is possible to obtain digital images representative of non-visible portions of the surface which approximate with good precision the images which could be obtained by directly viewing those portions.

This invention brings important advantages.

Thanks to this invention it was possible to provide a method which allows the obtainment of images representative of one or more characteristics of a predefined type of a surface of interest of a wooden article (above all wooden boards), in a simple and relatively inexpensive way even when the wooden articles are resting on conveying units which prevent the acquisition of complete images.

Finally, it should be noticed that this invention is relatively easy to produce and that even the cost linked to implementing the invention is not very high.

The invention described above may be modified and adapted in several ways. All details may be substituted with other technically equivalent elements and the materials used, as well as the shapes and dimensions of the various components, may vary according to requirements.

## Claims

1. A computer-implemented method for generating a digital image representative of one or more characteristics of a predefined type of a surface of interest (1) of a wooden article (2), comprising the steps of:
taking a first digital image (8) which represents one or more characteristics of a first type of a first portion (10) of the surface of interest (1);
taking a second digital image (9) which represents one or more characteristics of said first type of a second portion (11) of the surface of interest (1), wherein, on the surface of interest (1), the first portion (10) and the second portion (11) are at least partly spaced apart from each other and between them delimit a third portion (12) of the surface of interest (1) which is separate from them;
feeding the first digital image (8) and the second digital image (9), as input data, to an artificial intelligence algorithm trained to receive, as input data, a first input digital image (8), representative of one or more characteristics of said first type of a primary portion of a wooden surface, and a second input digital image (9), representative of one or more characteristics of said first type of a secondary portion of the wooden surface, and to supply as output data an output digital image which is representative of one or more characteristics of said predefined type of an intermediate portion of the wooden surface, which has predetermined dimensions and which is delimited by the primary portion and by the secondary portion of the wooden surface;
receiving the output digital image supplied by the artificial intelligence algorithm;
considering the output digital image as a third digital image (13) which represents one or more characteristics of said predefined type of the third portion (12) of the surface of interest (1); and
generating the digital image representative of the surface of interest (1) by associating with each other three digital images which correspond one to the first digital image (8) or to a digital processed version of the first digital image (8), one to the second image or to a digital processed version of the second digital image (9) and one to the third digital image (13), based on how the first portion (10), the second portion (11) and the third portion (12) are positioned relative to each other;
wherein, moreover, in the step for generating the digital image representative of the surface of interest (1) three digital images are used which are representative of said one or more characteristics of said predefined type.

2. The method according to claim 1, wherein, taken as the first digital image (8) and second digital image (9) are, respectively, a photographic image of the first portion (10) and a photographic image of the second portion (11) and wherein the artificial intelligence algorithm is trained to supply the output digital image which simulates a photographic image of a wooden surface.

3. The method according to claim 2, also comprising: a classification step during which, alternatively:
the digital image representative of the surface of interest (1) is processed to assign a classification to the pixels of which it is composed; or
the first digital image (8), the second digital image (9) and the third digital image (13) are processed to assign a classification to the pixels of which they are composed.

4. The method according to claim 3, wherein the classification step is a segmentation step during which, alternatively and respectively:
the digital image representative of the surface of interest (1) is processed with a segmentation algorithm; or
the first digital image (8), the second digital image (9) and the third digital image (13) are processed with a segmentation algorithm.

5. The method according to claim 2, wherein in the step for generating the digital image representative of the surface of interest (1), use is made, respectively, of a first segmented digital image (8) obtained by processing the first digital image (8) with a segmentation algorithm and a second segmented digital image (9) obtained by processing the second digital image (9) with the segmentation algorithm.

6. The method according to claim 1, wherein taken as the first digital image (8) and second digital image (9) are, respectively, a first segmented digital image (8) obtained by processing a digital image of the first portion (10) and a second segmented digital image (9) obtained by processing a digital image of the second portion (11) and wherein, in the step for generating the digital image representative of the surface of interest (1), the first digital image (8) and the second digital image (9) are used.

7. The method according to claim 6, also comprising a step of receiving the digital image of the first portion (10) and the digital image of the second portion (11), and a segmentation step during which the digital image of the first portion (10) and the digital image of the second portion (11) are processed with a segmentation algorithm for generating, respectively, the first segmented digital image (8) and the second segmented digital image (9).

8. The method according to claim 5, 6 or 7, wherein the artificial intelligence algorithm is trained to supply the output digital image which simulates a segmented image of a wooden surface.

9. The method according to any one of claims 1 to 8, wherein the step for generating the digital image representative of the surface of interest (1) comprises a combining step which is carried out before step of feeding the first digital image (8) and the second digital image to the artificial intelligence algorithm and during which the first digital image (8) and the second digital image (9) are combined in a digital working image in which between them they delimit a working space with dimensions corresponding to those of the output digital image, wherein the artificial intelligence algorithm is trained to receive, as input data, the first input digital image (8) and the second input digital image (9) as parts of a single overall input digital image which also comprises an input space delimited by the first input digital image (8) and by the second input digital image (9), and to supply the output digital image within a modified working digital image which comprises the output digital image in place of the working space.

10. The method according to any one of claims 1 to 9, wherein the wooden article (2) is a wooden board and the surface of interest (1) is a part of a lower surface of the wooden board and wherein the third portion (12) of the surface of interest (1) corresponds to a zone of the surface of interest (1) resting on a conveying device (4).

11. The method according to any one of claims 1 to 10, wherein said steps are repeated for a plurality of pairs constituted of a first portion (10) and of a second portion (11) of a same surface of interest (1) and wherein said digital image representative of one or more characteristics of a predefined type of the surface of interest (1) represents an entire extent of the surface of interest (1) which comprises the plurality of pairs.

12. The method according to any one of claims 1 to 11, wherein, on the surface of interest (1), the third portion (12) has a width, measured between the first portion (10) and the second portion (11), which is less than 80 mm.

13. The method according to any one of claims 1 to 12, wherein said first type and said predefined type are the same as each other or different and/or wherein the first type and the predefined type correspond to a specific combination of channels/types of information saved in the digital image.

14. A computer program comprising instructions which, when the program is run in a computer, make the computer carry out the steps of the method according to any one of claims 1 to 13.

15. A data processing device comprising means configured to carry out the steps of the method according to any one of claims 1 to 13.

16. An apparatus (3) comprising:
a conveying device (4) for conveying wooden articles (2) in a direction of forward movement (5), which comprises a plurality of supporting units (7) for the wooden articles (2);
one or more digital image acquisition devices (6), positioned at an acquisition station, under the supporting units (7), the one or more acquisition devices (6) being configured to acquire digital images of a lower surface of each wooden article (2) while it is resting on the supporting units (7); and
a data processing device according to claim 15, configured to use, as the first digital image (8) and second digital image (9), digital images acquired by the one or more image acquisition devices (6) or processed versions of those digital images;
wherein, moreover, said surface of interest (1) is part of said lower surface and said third portion (12) of the surface of interest (1) is a portion of the surface of interest (1) the viewing of which by the one or more image acquisition devices (6) is obstructed by the supporting units (7).
